(19) Europäisches Patentamt
European Patent Office
Office européen des brevets

(11) Veröffentlichungsnummer: **0 037 071**
A2

(12) # EUROPÄISCHE PATENTANMELDUNG

(21) Anmeldenummer: **81102243.3**

(22) Anmeldetag: **25.03.81**

(51) Int. Cl.$^3$: **H 04 B 7/26**
H 04 B 17/00

(30) Priorität: **31.03.80 DE 3012513**

(43) Veröffentlichungstag der Anmeldung:
**07.10.81 Patentblatt 81/40**

(84) Benannte Vertragsstaaten:
**AT BE CH FR GB IT LI LU NL SE**

(71) Anmelder: **SIEMENS AKTIENGESELLSCHAFT Berlin und München**
**Postfach 22 02 61**
**D-8000 München 22(DE)**

(72) Erfinder: **Kammerlander, Karl**
**Wiesenstrasse 10**
**D-8190 Wolfratshausen(DE)**

(54) **Verfahren zur Überwachung analoger und digitaler Mobilfunkverbindungen.**

(57) Die Erfindung bezieht sich auf ein Verfahren zur Überwachung analoger und digitaler Mobilfunkverbindungen, insbesondere eines mobilen Funknetzes mit einer Anzahl Funkkonzentratoren in gegenseitiger räumlicher Anordnung nach Art eines Zellularsystems mit sich überlappenden Funkbereichen, bei dem jeweils eine fest vorgegebene Anzahl von einander unmittelbar benachbarten Funkbereichen eine Funkbereichsgruppe bilden, in denen sich die insgesamt zur Verfügung stehenden Frequenzkanäle wiederholen. Für ein solches Funknetz soll eine einfache, funktionssichere Überwachung geschaffen werden. Die Erfindung sieht hierzu vor, daß die in bestimmten Zeitschlitzen als funkbereichsbezogene Informationsblöcke übertragenen Nutzsignale auf der Sendeseite mit einer Zeitkomprimierung und jeweils einer Anfangsverzögerung versehen werden. In die entstehenden Zeitlücken werden Überwachungssignale enthaltende Datenblockfolgen eingefügt. Auf der Empfangsseite wird nach Ausblendung der einer Signalisierungsverarbeitung zugeführten Datenblockfolgen aus dem zusammengesetzten Summensignal das komprimierte Empfangs- Nutzsignal einer Einrichtung zur Expandierung zugeführt. Dabei werden die Zeitblöcke auf die exakt gleiche Länge des ursprünglichen Nutzsignals gebracht.

./...

EP 0 037 071 A2

Croydon Printing Company Ltd.

FIG 1

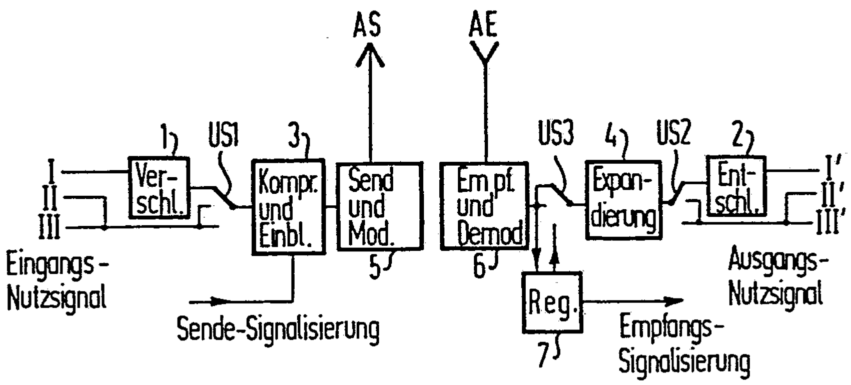

AS
AE
1
US1
3
US3
4
US2
2
I
II
III
Ver-
schl.
Kompr.
und
Einbl.
Send
und
Mod.
Em pf.
und
Demod
Expan-
dierung
Ent-
schl.
I'
II'
III'
5
6
Eingangs-
Nutzsignal
Reg.
Ausgangs-
Nutzsignal
Sende-Signalisierung
7
Empfangs-
Signalisierung

SIEMENS AKTIENGESELLSCHAFT
Berlin und München

Unser Zeichen
VPA 80 P 6569 E

# Verfahren zur Überwachung analoger und digitaler Mobilfunkverbindungen

Die Erfindung bezieht sich auf ein Verfahren zur Überwachung analoger und digitaler Mobilfunkverbindungen, insbesondere eines mobilen Funknetzes mit einer Anzahl Funkkonzentratoren in gegenseitiger räumlicher Anordnung nach Art eines Zellularsystems mit sich überlappenden Funkbereichen, bei dem jeweils eine fest vorgegebene Anzahl von einander unmittelbar benachbarten Funkbereichen eine Funkbereichsgruppe bilden, in denen sich die insgesamt zur Verfügung stehenden Frequenzkanäle wiederholen, bei dem ferner der Frequenzverteilungsplan für die Funkkonzentratoren so festgelegt ist, daß Gleichkanalstörungen im jeweiligen Funkbereich einschließlich einer erweiterten Randzone weitgehend ausgeschlossen sind und bei dem wenigstens die Signalisierung in digitaler Form zwischen den ortsfesten Funkkonzentratoren und den beweglichen Teilnehmerstationen über für Duplexbetrieb ausgelegte Organisationskanäle vorgenommen ist.

Für ein solches mobiles Funknetz, wie es beispielsweise durch die DE-AS 2 659 635 bekannt ist, wurde in einer früheren Patentanmeldung der Anmelderin eine Lösung für die Übertragung der die Organisationsfunktionen beinhaltenden Informationen zwischen den Funkkonzentratoren und den beweglichen Teilnehmerstationen angegeben. Eine große Bedeutung kommt dabei auch der Überwachung der Funkverbindungen zu, insbesondere hinsichtlich der teilnehmerindividuellen Identifizierung

Klu 1 Mai / 31.3.80

der Funkverbindungen zum Zweck einer realistischen, irrtumsfreien Gebührenerfassung und der Messung und Überwachung des Geräuschabstandes der Verbindung, die es erlaubt, die Verbindung automatisch auszulösen oder umzuschalten, sobald ein minimal zulässiger Geräuschabstand für eine bestimmte Zeit unterschritten wird.

Bisher wird die Gebührenzählung ausschließlich von der Empfangsfeldstärke abgeleitet. Dabei kann die Gebührenzählung fälschlicherweise durch Störsignale oder Überreichweiten aufrechterhalten werden. Identifizierung und Überwachung der Sprechqualität ist dabei nicht möglich. Zusätzliche Signalisierungen müssen in separaten, hohen Filteraufwand bedeutenden Schmalbandkanälen übertragen werden.

Der Erfindung liegt die Aufgabe zugrunde, für Mobilfunkverbindungen eine einfache, funktionssichere Überwachung zu schaffen, mit der die vorstehend geschilderten Nachteile bekannter Einrichtungen vermieden werden.

Diese Aufgabe wird gemäß der Erfindung in der Weise gelöst, daß die in bestimmten Zeitschlitzen als funkbereichsbezogene Informationsblöcke (Zeitblöcke) übertragenen Nutzsignale auf der Sendeseite mit einer Zeitkomprimierung und jeweils einer Anfangsverzögerung versehen und in die entstehenden Zeitlücken Überwachungssignale enthaltende Datenblockfolgen (Unterblöcke eines Signalisierungsblocks) eingefügt werden und daß auf der Empfangsseite nach Ausblendung der einer Signalisierungsverarbeitung zugeführten Datenblockfolgen aus dem zusammengesetzten Summensignal das komprimierte Empfangs-Nutzsignal einer Einrichtung zur Expandierung zugeführt und die Zeitblöcke auf die exakt gleiche Länge des ursprünglichen Nutzsignals gebracht werden.

In vorteilhafter Ausgestaltung des Erfindungsgegenstandes ist vorgesehen, daß die Komprimierung in der Weise erfolgt, daß das zu übertragende Nutzsignal in einen analogen Zwischenspeicher (Pufferspeicher) eingelesen und mit einer geringen Zeitverzögerung schneller wieder ausgelesen wird und die Expandierung in der Weise erfolgt, daß das komprimierte Empfangs-Nutzsignal mit einem entsprechend der Auslesung des sendeseitigen Speichers erhöhten Takt in einen Pufferspeicher eingelesen und mit dem ursprünglich auf der Sendeseite verwendeten Einlesetakt wieder ausgelesen wird.

Die Synchronisierung der Datenblöcke erfolgt dabei in vorteilhafter Weise durch Synchronisation auf den Organisationskanal des Funknetzes.

Die Datenblockfolgen beinhalten in vorteilhafter Weise Informationen über eine teilnehmerindividuelle Identifizierung der Mobilfunkverbindungen und den Geräuschabstand der Verbindung sowie den Teilnehmer betreffende und systeminterne Signalisierungen.

Nachstehend wird die Erfindung anhand von in der Zeichnung dargestellten Ausführungsbeispielen näher erläutert.

Es zeigen
Fig. 1 das Blockschaltbild eines Sprechkanals und
Fig. 2 in einem Zeit-Diagramm die Signalkomprimierung und -Expandierung.

In Fig. 1 ist ein Kanal dargestellt, der für verschiedene Betriebsarten vorgesehen ist. Dabei kann es sich um die Übertragung verschleierter Sprache (Eingang I), um klare Sprache oder Wechselstromtelegrafie (Eingang II) oder um digitale Daten (Eingang III) handeln. Zur Umschaltung auf die verschiedenen Betriebsarten sind auf der Sendeseite und der Empfangsseite Umschalter US1, US2 vorgesehen. Im Übertragungsweg der verschleierten Sprache ist sendeseitig eine Verschleierungseinrichtung 1 und empfangsseitig eine Entschleierungseinrichtung 2 eingeschaltet. Auf der Sendeseite ist eine Vorrichtung 3 zur Komprimierung des Eingangs-Nutzsignals und zur Einblendung einer Sendesignalisierung vorgesehen, die ausgangsseitig mit dem Sender und Modulator 5 verbunden ist. An diesen ist die Sendeantenne AS angeschlossen. Die Empfangsantenne AE ist mit einem Empfänger und Demodulator 6 verbunden, dem der Umschalter US3 nachgeschaltet ist und dessen Ausgang ferner mit einer Einrichtung zur Ausblendung der Empfangs-Signalisierung und einem Regenerator 7 verbunden ist. Im Signalweg ist im Anschluß an den Umschalter US3 eine Einrichtung 4 zur Expandierung des Empfangs-Nutzsignals angeordnet, die mit dem Umschalter US2 verbunden ist, über den entsprechend der verwendeten Betriebsart der betreffende Ausgang I', II', III' angeschlossen wird. Für eine verschleierte Sprache ist im Ausgangskreis I' die Einrichtung 2 zur Entschleierung eingeschaltet.

Gemäß der vorliegenden Erfindung erfolgt eine Verbindungsüberwachung unter Verzicht auf Pegel- und Pilotüberwachung in der Weise, daß in die analogen und verschleierten Sprachsignale jeweils auf der Sendeseite kurze Datenblockfolgen eingeblendet werden, die auf der Empfangsseite wieder ausgeblendet werden. Die Sprachsignale werden auf der Sendeseite in Zeitblöcke quantisiert und mit einer leichten Zeitkomprimierung übertragen. Durch die Zeitkomprimierung entstehen kurze Lücken im Sprachsignal, in die entsprechende Datenblockfolgen eingefügt werden. Auf der Empfangsseite werden diese Datenblockfolgen als Datentelegramme gelesen. Sie werden aus den Sprachsignalen wieder ausgeblendet und die Lücken durch Zeitexpandierung wieder exakt geschlossen. Damit besteht die Möglichkeit, gleichzeitig mit den Sprachsignalen auch Datensignale auszutauschen. Dieser Datenaustausch dient zum einen der Verbindungsüberwachung. Zum Zweck der Verbindungsüberwachung werden als gegenseitige Identifizierungssignale sowohl die Funkbereichsnummer wie auch die Funkrufnummer des betreffenden Teilnehmers fortlaufend gegenseitig ausgetauscht. Solange diese Identifizierungssignale einwandfrei empfangen werden, ist die Verbindung in Ordnung. Bei Gleichkanalstörungen, welche die Verbindung feldstärkemäßig beeinflussen oder auch nach Gesprächsende die Verbindung weiter simulieren, wird wegen fehlender Identifizierung die Verbindung ausgelöst und die Gebührenzählung gestoppt. Dadurch wird eine unnötige Kanalbelegung vermieden und der Kanal kann sofort für neue Verbindungen zur Verfügung gestellt werden.

Neben der teilnehmerindividuellen Identifizierung von Mobilfunkverbindungen zum Zweck einer realistischen, irrtumsfreien Gebührenerfassung und Unterbrechung der Verbindung bei Verlust der Lesbarkeit der Identifizierung ohne Rücksicht auf die herrschende Empfangsfeldstärke und Messung und Überwachung des Geräuschabstandes der Verbindung, die es erlaubt, die Verbindung automatisch auszulösen oder umzuschalten, sobald ein minimal zulässiger Geräuschabstand für eine bestimmte Zeit unterschritten wird, können die eingefügten Datenblockfolgen auch der Übertragung von Signalisierungen dienen, die den Teilnehmer betreffen, wie Gebührenstand, Prioritätszeichen und Rufnummern von Teilnehmern, die während einer Verbindung einen vergeblichen Anruf tätigten sowie auch der Übertragung von systeminternen Signalisierungen, die den Funkorganisations-Ablauf betreffen, wie z.B. Einstellen der Sendeleistung,Auslöse- oder Umschaltezeichen.

Die Signalkomprimierung erfolgt in der Weise, daß das Nutzsignal auf der Sendeseite in der Einrichtung 3 in einen anlogen Pufferspeicher eingelesen wird, der in seiner Länge und Taktfrequenz so dimensioniert ist, daß er innerhalb der vorgegebenen Zeit eines Signalisierungsunterblockes vollgeschrieben wird. Der Auslesungsvorgang des Speichers geschieht parallel mit einem höheren Takt, wobei der Beginn jeweils um die Signalisierungsunterblocklänge verzögert ist. In die dabei entstehenden Lücken werden die Unterblöcke eines Digitalsignals (Datensignal=Signalisierungsblock, bestehend aus vielen kleinen Unterblöcken) eingeblendet. Dieser Vorgang wiederholt sich periodisch.

Empfangsseitig werden die Unterblöcke ausgeblendet und die Lücken ebenfalls durch einen analogen Zwischenspeicher wieder geschlossen. Dabei wird das komprimierte Empfangs-Nutzsignal mit einem entsprechend der Auslesung des sendeseitigen Speichers erhöhten Takt in den Zwischenspeicher eingelesen und mit dem ursprünglich auf der Sendeseite verwendeten Einlesetakt wieder ausgelesen. Damit steht für die Nutzinformation in jedem Fall (Sprache, Wechselstromtelegrafie-Daten oder digitale Daten) ein transparenter Kanal zur Verfügung.

Der Vorgang des Komprimierens und Expandierens und Ein- und Ausblenden der Datenblockfolgen wird nachfolgend in einem Zeitablaufplan entsprechend Fig. 2 erläutert. Dabei ist in Zeile 1 das Nutzsignal dargestellt, das in 12,5 ms-Zeitblöcke quantisiert ist. 48 solcher Zeitblöcke (48 · 12,5 ms = 600 ms) bilden einen Unterrahmen im Organisationsplan. Zeile 2 zeigt das komprimierte Nutzsignal mit einer Länge der Zeitblöcke von jeweils 11,364 ms. Die durch Zeitverzögerung jeweils am Anfang eines Zeitblocks entstehenden Signallücken von 1,136 ms sind in Zeile 3 dargestellt. In den Signallücken von 1,136 ms ist Raum für je 6 Bit der Datenrate 5,28 kBit/s. In eine Lücke wird aber nur je ein Block von 4 Bit eingeblendet (Zeile 4) und jeweils vor und nach diesem Block ein Leerbit gelassen. Durch diese Leerbiteinblendung wird eine gegenseitige Beeinflussung von Datensignal und Nutzsignal vermieden. Das zusammengesetzte Summensignal, das auf dem Funkweg übertragen wird, ist in Zeile 5 dargestellt. Zeile 6 zeigt die ausgeblendete Datenblockfolge auf der Empfangsseite, die im Rahmen einer Signalisierungsverarbeitung ausgewertet wird. Das komprimierte Empfangs-Nutzsignal (Zeile 7) wird in der Einrichtung 4 zur Expandierung wieder mit einem um 9,1 % erhöhten Takt in einen Pufferspeicher eingelesen, und mit dem ursprünglich auf der Sendeseite verwendeten Einlesetakt ausgelesen. Damit werden alle Lücken genau geschlossen, wie das in Zeile 8 dargestellte expandierte Nutzsignal zeigt.

Der für dieses Verfahren erforderliche exakte Zeitsynchronismus ist durch die Synchronisation auf den Organisationskanal gegeben und geht auch während der Verbindung in den Sprechkanälen dank der Dateneinblendung nicht verloren. Die Signalisierungsphasen sind dabei genau mit dem synchronisationsbedingten Unterrahmen (600 ms) synchron.

Durch die gleichmäßige Verteilung der Unterblöcke bei der Signalübertragung ist aus fernsprechtechnischer Sicht eine minimale zusätzliche Laufzeit von ca. 1 ms pro Sprechrichtung erzielt. Der funktechnische Vorteil dieser feinstufigen Verteilung liegt in der exakten Erfassung des Geräuschmittelwertes der Funkstrecke, die durch Rayleigh-Fading verursacht wird (geschwindigkeitsabhängiges Rayleighgeräusch bei Fahrbetrieb). Die geschwindigkeitsunabhängige Erfassung des Geräusches wird durch die Verteilung der Unterblöcke in Kombination mit einer entsprechenden Integrationszeit-Bemessung sichergestellt. Die Bewertung des Geräuschabstandes der Nutzverbindung erfolgt durch Messung des Phasenjitters der Unterblöcke.

5 Patentansprüche
2 Figuren

Patentansprüche

1. Verfahren zur Überwachung analoger und digitaler Mobilfunkverbindungen, insbesondere eines mobilen Funknetzes mit einer Anzahl Funkkonzentratoren in gegenseitiger räumlicher Anordnung nach Art eines Zellularsystems mit sich überlappenden Funkbereichen, bei dem jeweils eine fest vorgegebene Anzahl von einander unmittelbar benachbarten Funkbereichen eine Funkbereichsgruppe bilden, in denen sich die insgesamt zur Verfügung stehenden Frequenzkanäle wiederholen, bei dem ferner der Frequenzverteilungsplan für die Funkkonzentratoren so festgelegt ist, daß Gleichkanalstörungen im jeweiligen Funkbereich einschließlich einer erweiterten Randzone weitgehend ausgeschlossen sind und bei dem wenigstens die Signalisierung in digitaler Form zwischen den ortsfesten Funkkonzentratoren und den beweglichen Teilnehmerstationen über für Duplexbetrieb ausgelegte Organisationskanäle vorgenommen wird, d a d u r c h g e k e n n z e i c h n e t, daß die in bestimmten Zeitschlitzen als funkbereichsbezogene Informationsblöcke (Zeitblöcke) übertragenen Nutzsignale auf der Sendeseite mit einer Zeitkomprimierung und jeweils einer Anfangsverzögerung versehen und in die entstehenden Zeitlücken Überwachungssignale enthaltende Datenblockfolgen (Unterblöcke eines Signalisierungsblocks) eingefügt werden und daß auf der Empfangsseite nach Ausblendung der einer Singalisierungsverarbeitung zugeführten Datenblockfolgen aus dem zusammengesetzten Summensignal das komprimierte Empfangs- Nutzsignal einer Einrichtung zur Expandierung zugeführt und die Zeitblöcke auf die exakt gleiche Länge des ursprünglichen Nutzsignals gebracht werden.

2. Verfahren nach Anspruch 1, dadurch gekennzeichnet, daß die Komprimierung in der Weise erfolgt, daß das zu übertragende Nutzsignal in einen alalogen Zwischenspeicher (Pufferspeicher) eingelesen und mit einer geringen Zeitverzögerung zu schneller wieder ausgelesen wird.

3. Verfahren nach Anspruch 1, dadurch gekennzeichnet, daß die Expandierung in der Weise erfolgt, daß das komprimierte Empfangs-Nutzsignal mit einem entsprechend der Auslesung des sendeseitigen Speichers erhöhten Takt in einen Pufferspeicher eingelesen und mit dem ursprünglichen auf der Sendeseite verwendeten Einlesetakt wieder ausgelesen wird.

4. Verfahren nach einem der Ansprüche 1 bis 3, dadurch gekennzeichnet, daß die Synchronisierung der Datenblöcke durch Synchronisation auf den Organisationskanal des Funknetzes erfolgt.

5. Verfahren nach einem der vorhergehenden Ansprüche, dadurch gekennzeichnet, daß die Datenblockfolgen Informationen über eine teilnehmerindividuelle Identifizierung der Mobilfunkverbindungen und den Geräuschabstand der Verbindung sowie den Teilnehmer betreffende und systeminterne Signalisierungen beinhalten.

FIG 1

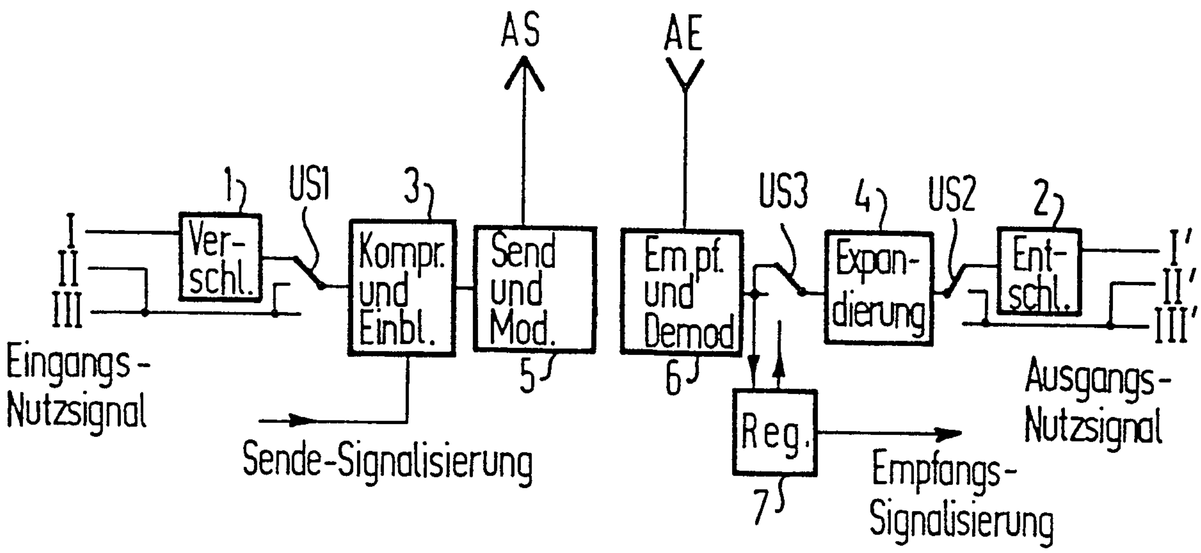
AS
AE
1
US1
3
US3
4
US2
2
I
II
III
Ver-
schl.
Kompr.
und
Einbl.
Send
und
Mod.
Em pf.
und
Demod
Expan-
dierung
Ent-
schl.
I'
II'
III'
5
6
Reg.
7
Eingangs-
Nutzsignal
Sende-Signalisierung
Empfangs-
Signalisierung
Ausgangs-
Nutzsignal

FIG 2

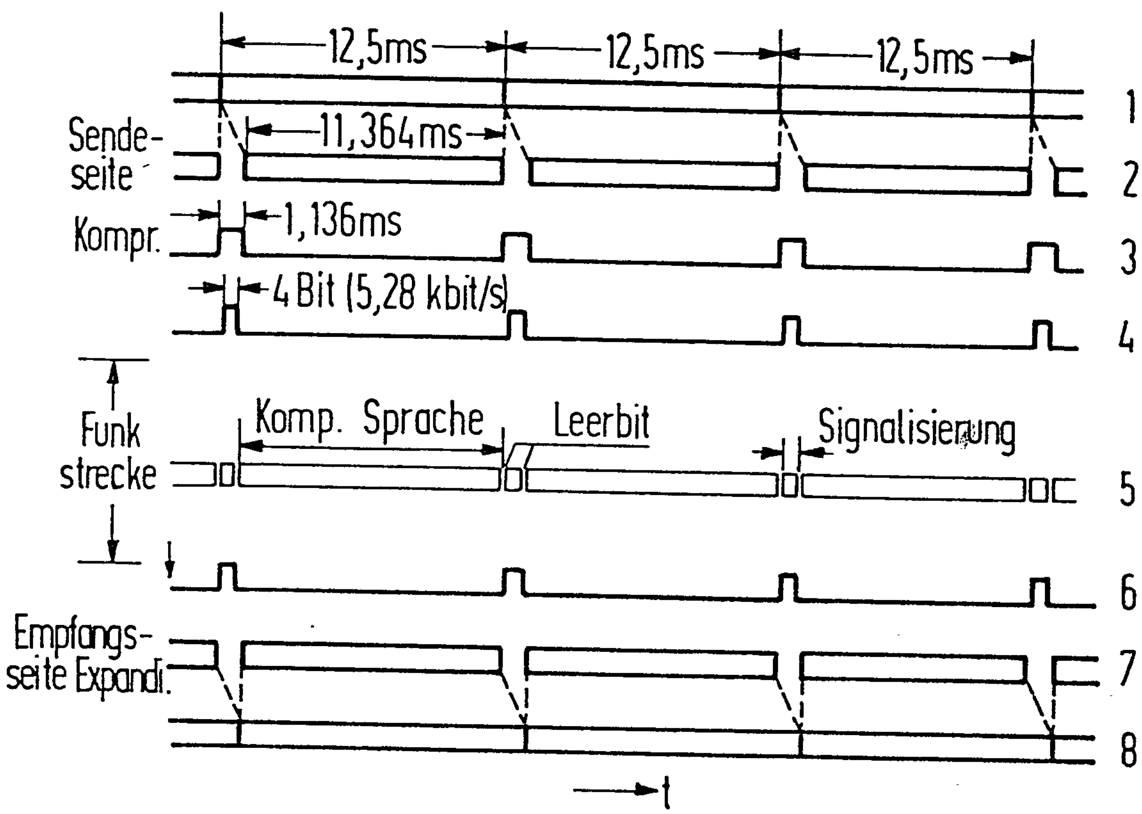
12,5ms
12,5ms
12,5ms
1
Sende-
seite
11,364ms
2
Kompr.
1,136ms
3
4 Bit (5,28 kbit/s)
4
Funk
strecke
Komp. Sprache
Leerbit
Signalisierung
5
6
Empfangs-
seite Expandi.
7
8
t